# EUROPEAN PATENT SPECIFICATION

(11) **EP 4 303 372 B1**
(45) Date of publication and mention of the grant of the patent: **03.12.2025**
(21) Application number: 22715645.2
(22) Date of filing: 28.02.2022
(51) Int. Cl.: E03C 1/05

(54) **ELECTRONIC CONTROL WITH WATERTIGHT STRUCTURE**
ELEKTRONISCHE STEUERUNG MIT WASSERDICHTER STRUKTUR
COMMANDE ÉLECTRONIQUE À STRUCTURE ÉTANCHE À L'EAU

(30) Priority: 26.02.2021 ES 202130169
(43) Date of publication of application: 10.01.2024
(73) Proprietor: Sedal Digital Systems, S.L., 08740 Sant Andreu De La Barca (ES)
(72) Inventor: BELLO LARROCHE, Rafael, 08760 Martorell (ES)
(74) Representative: Ponti & Partners, S.L.P
(86) International application number: PCT/ES2022/070105
(87) International publication number: WO 2022/180294

(56) References cited:
- EP-A1- 3 699 365
- WO-A2-2011/146941
- DE-A1- 102011 054 049

## Description

The present invention relates to an electronic control of those which are preferably installed in wet areas, such as shower cubicles, bathtubs or water supply points in general, wherefrom the status of the water to be supplied is regulated and/or monitored.

### Background of the invention

The use of electronic controls within a water supply regulation assembly is known, for example, from different types of electronically operated taps. In these electronic tap assemblies there are internal areas of the tap considered as dry where, among others, water and humidity sensitive electronic components are installed.

In systems where the electronic control is independently installed with respect to the water supply and regulation system, this electronic control is usually located in the wet area, understood as the area capable of receiving the water projection on the control. In order to allow its ergonomic use and to ensure the integrity of the electronic control during its useful life, this control must incorporate an anchoring system to surfaces and/or structural elements available in the wet area and a watertight configuration in itself, since it does not have the structure of the electronic tap indicated above, wherein the electronic system thereof uses the conventional anchoring of the tap and its dry area to be able to have the electronic system fixed in the wet area, but in a watertight manner.

In this regard, electronic controls are known that are installed in wet areas independently that form a compact watertight assembly in itself, which are fixed to the installation surface directly or through an auxiliary structure that does not form part of the control and whereby sealing means do not have to be interposed so that water cannot enter the area of the electronic components of the control itself.

These mounting systems in auxiliary structures are usually rigid and in case of violent impacts or stresses on them, easy disassembly and/or breakage may occur.

Documents DE102011054049A1, WO2011/146941A2 and EP3699365A1 disclose an electronic control wherefrom the status of the water to be supplied is regulated and/or monitored, with the principle features of the preamble of claim 1.

### Description of the invention

The purpose of the present invention is to provide an electronic control with watertight structure, which resolves the aforementioned drawbacks, offering other advantages which will be described below.

Thus, and in accordance with this object, with respect to a first aspect, the present invention is based on an electronic control according to appended claim 1 with a watertight structure, wherein this type of control is installed in a wet area as a controlling device of a water supply assembly wherefrom it is independent. The electronic control incorporates elements of interaction with the user as a way of monitoring and/or regulating the flow and/or temperature parameters of the water to be supplied and/or other information/operating options of the water supply assembly, being in communication with external water mixing and supply means.

Characteristically, the control comprises:
- a mounting base that is fixed to an installation surface and comprises receiving and anchoring means for a control body; and
- a control body comprising a coupling element to the receiving and anchoring means of the mounting base and elements for monitoring and/or regulating the flow and/or temperature parameters of the water to be supplied;

According to the present invention, between the coupling walls corresponding to the coupling element and the receiving and anchoring means, there is at least one sealing element with elastic properties, wherein this sealing element is located between the coupling walls that are perpendicular to the insertion axis of the body in the mounting base or appreciably inclined, said coupling walls maintaining at least a certain component perpendicular to the insertion axis.

Also according to the present invention, in the position of mounting and normal use of the control, the sealing element is compressed exerting a force in the axial direction of the insertion axis of the control against the coupling walls, which are perpendicular or appreciably inclined with respect to said insertion axis. The walls of the mounting base are separated on the insertion axis of the body walls which would limit an axial displacement therebetween if they were in contact. Despite this separation in the insertion axis, the sealing element is configured in such a way that it prevents the entry of water in the central area inside the sealing element, absorbing both the axial mounting tolerances, as well as the pressures or impacts that are applied on the body in the direction of the insertion axis and in the coupling direction.

With this configuration it is achieved that an electronic control, with installation independent of the water mixing and supply system, can advantageously achieve a watertightness in the mounting of its two main parts: its support base and the body of the control itself. All of this thanks to the advantageous configuration of a sealing element, which will preferably be of the sealing gasket type, made in a single part with elastic property without auxiliary elements, which is dimensioned so that the reaction force in the axial direction in its preloaded condition of mounting and conventional use, up to its maximum achievable compression configuration, is the desired one. Typically, this sealing element will be made using optimised aspects to achieve specific damping, force and displacement properties different from those achievable with simple O-ring gaskets.

Preferably, the sealing element configured in an elastic joint of a single part, to achieve these characteristics, has an oval, rectangular or similar section with an aspect ratio of preferably 2 to 1 up to a 5 to 1 ratio between its height and width, taking the height in the direction of the mounting axis.

According to the invention, this elastic joint forming the sealing element is composed of at least elastomeric material. Preferably, this elastomeric material is NBR, silicones and/or EPDM.

In a possible configuration of the sealing element, once mounted and with the mounting compression, this sealing element is compressed between 15 and 30%, while its maximum compression would be approximately 50%.

The elastic sealing element and the forces it generates in the axial direction, resulting from its compression-preload in the mounting position, result from the configuration of this sealing element, wherein this configuration can be very wide and is always performed to maintain the pressure in the anchoring of the coupling system between the control body part and its mounting base, as well as to have a separation distance between the walls of the two parts, this separation being contemplated in the insertion axis. On the other hand, the configuration of the maximum achievable compression must allow, starting from the mounting position, a greater compression to perform the disassembly of the parts of the control, with an appreciable resistance to this compression to avoid an involuntary disassembly during the handling of the control.

All this must be done taking into account that the elastic element must be kept at all times within its elastic working range, which allows a recovery of its original geometry.

The concept of preloaded elastic joint should be understood as the compression of the sealing element and recovery capacity of its original size/geometry, between at least two walls of different parts, whereon it performs the corresponding reaction force due to its compression state.

The elastic sealing element is advantageously installed between the coupling walls, between the mounting base and the walls defining the control body. These coupling walls are adjacent between these two parts and define the boundaries between the atmospheric area and the dry area. More specifically, the elastic sealing element is installed between two adjacent walls of these two parts that are perpendicular to the insertion axis or between walls that are appreciably perpendicular but with a perpendicular component.

The final mounting position of these two parts implies a compression of the sealing element between these walls that are perpendicular or appreciably inclined to the insertion axis of mounting, the rest of the walls of both parts being configured separately from one other in the insertion axis, so that they do not come into contact, at least, those that due to their position could limit a possible axial displacement in this insertion axis and in the same insertion direction. This causes a longitudinal separation distance in the insertion axis between the walls of the two parts that allows, in the event of impact or pressure in the direction of said axis, the longitudinal displacement of the control body and the corresponding absorption of the impact due to the elasticity of the sealing element, which is the only element in contact between the two parts in said insertion axis. These longitudinal separation distances are moved optionally, although preferably, between 2 and 5 mm, although other separations can be made according to the impact absorption capacity and manufacturing tolerances that you want to have, having to dimension the elastic sealing element in accordance with the energy of the impact to be absorbed and the size of the element to be anchored.

This elasticity and compression capacity also allows a total absorption of the manufacturing and mounting tolerances between the two parts that are coupled, eliminating, in mounted assembly condition, the axial and transversal clearances to the mounting axis necessary for a non-interference mounting.

In a preferred embodiment of the invention, the mounting system between the receiving and anchoring means of the mounting base and the body coupling means forms a simultaneous rotation and axial displacement coupling system, with an anchoring in the mounting end position as a bayonet-type closure or the like.

This type of closure allows having a coupling between the two parts maintaining said separation between the walls of one part and the other in the insertion axis of mounting, allowing the relative axial movement between parts, in the direction of insertion.

Furthermore, this bayonet system or the like enables, unlike a threaded one, to avoid voluntary disassembly by a rotation in the opposite direction, since the control disassembly must be performed in correct sequence and with partial overlap of movements. These disassembly movements must firstly be performed by exerting an axial pressure to further compress the already preloaded sealing element, in order to move the control and free it from the anchoring. Secondly, a higher turning torque must be applied than is necessary to overcome the friction generated by the sealing element, typically, and to be able to release the interlocking protuberance in the anchoring position.

The preferred use of this system with respect to other alternatives is also based on the fact that, with the use of a bayonet coupling, the relative final position of the body with respect to its mounting base wherein it is anchored, is determined both axially and angularly, the latter being critical so that the user-oriented elements are presented in a defined angular position for optimal use.

Alternatively, this closure can be performed by another coupling system of those considered conventional that allows relative longitudinal displacement between parts, in the direction of insertion. One of these alternative systems may be clipping.

As has been mentioned, preferably, the sealing element is configured in such a way that it makes a friction due to the pressure exerted between the coupling walls to the rotation of the control body, with respect to the base, hindering an involuntary disassembly rotation between the two mounting parts that come into contact.

Optionally, the mounting base has a mounting aid element or characteristic that enables orienting its final mounting position by forcing the body coupling in the base to be in the desired final operating orientation, wherein this guiding element is a protruding tab, a mark or a chamfer of its perimeter geometry.

With this possible configuration it enables that, when installing the mounting base, since this determines the final anchoring position of the body part, it is installed with a correct orientation, incorporating, for example, a tab, mark, chamfer or similar that allows the placement of a level therein so that in this simple way it can be ensured that once the control body is mounted, it will be optimally oriented according to the design of the interface elements with the user that it incorporates.

According to an optional but preferred embodiment of the invention, the communication made by the electronic control with the external water mixing and supply means is made by cables that connect in the dry area of the body of the control passing through watertight passages of these cables and that communicate with the atmospheric area of the mounting base and from there to said external water mixing and supply means.

This embodiment creates a communication between the control and the external water mixing and supply means in a wired manner, using the corresponding opening through the mounting base to enter the body of the control through passages, wherein a resin is conventionally made or gaskets are inserted to ensure its watertightness, and to reach the electronic elements in the dry area of said body.

Alternatively, communication with the external water mixing and supply means is performed by wireless devices. These wireless communication devices may be associated to Bluetooth, WiFi, or other conventional wireless communication systems.

In any case, and preferably in the invention, the mounting base and the installation surface has, at least, one gasket that prevents the passage of water to the area of the passage of cables through the surface towards the control, and/or towards the area of through-openings of the fixing means of the base to the surface. This configuration ensures watertightness towards the open elements on the installation surface, both the possible passage of cables, and the means of mechanical fixing to said surface.

Optionally but preferably, in the dry area of the body, protected from the passage of water and vapours by the sealing element, there is one or more communication openings in at least one surrounding wall of the control body that communicates its internal dry area with the external atmospheric area, with a pressure balancing membrane disposed transversely in these openings, covering them.

This pressure balancing system allows, with a membrane that is impermeable to water and water vapour but permeable to air, to ensure that the pressure inside the dry area of the control body is the atmospheric. This is advantageous when in devices that must be water- and water-vapour-tight, temperature differences with the environment can occur that can generate suction effect through the sealing elements, deformations in the enclosure due to overpressure or depression, etc. The sealing element that is part of the invention prevents the water from flooding the pressure balancing membrane, clogging it and eliminating its function of allowing the flow of air without moisture that balances the pressures between the interior of the control and the exterior.

Also optionally, but preferably, the body has a monitoring and/or control interface comprising a rotary parameter selection element and/or regulation/monitoring options.

Optionally, and additionally or alternatively to the foregoing, the monitoring and/or control interface includes a status display device and/or governance options of the control over the external water mixing and supply means.

Likewise, the monitoring and/or control interface may include one or more push-button elements configured for governance and selection of actuation options by the user.

With respect to the latter, the push-button elements may be mechanical, capacitive, optical, piezoelectric push-buttons or the like, within the conventional types known and used for user interaction.

These configurations of the monitoring and/or control interface make it possible to have various monitoring and/or control elements so that all of them are in an embodiment of a control, or only one or more of them, which requires the electronic component and, therefore, the watertightness of the body of the control to house them.

With respect to these configurations of the monitoring and/or control interface, preferably, the control body includes processing means that perform the management of said control interface and the management of communication with the external water mixing and supply means.

Preferably, and with respect to the embodiment including a rotary selection element, these processing means include an angular position determination system of the rotary selection element. This allows the use of rotary elements as a parameter selection system on the control in a reliable manner with respect to the movement that the user makes on said rotary element.

### Brief description of the drawings

In order to better understand the description made, a set of drawings has been provided which, schematically and solely by way of non-limiting example, represents several practical examples of embodiment.
Figure 1 is a perspective exploded view of the control in its installation on a surface.
Figure 2 is a longitudinal sectional view with respect to the insertion axis of mounting.
Figure 3 is a longitudinal sectional view with respect to the insertion axis of mounting, rotated with respect to the insertion axis and with respect to Figure 2 and sectioned by the communication openings between dry area and atmospheric area.
Figure 4 is an elevational view from the rear of the controller.

### Description of a preferred embodiment

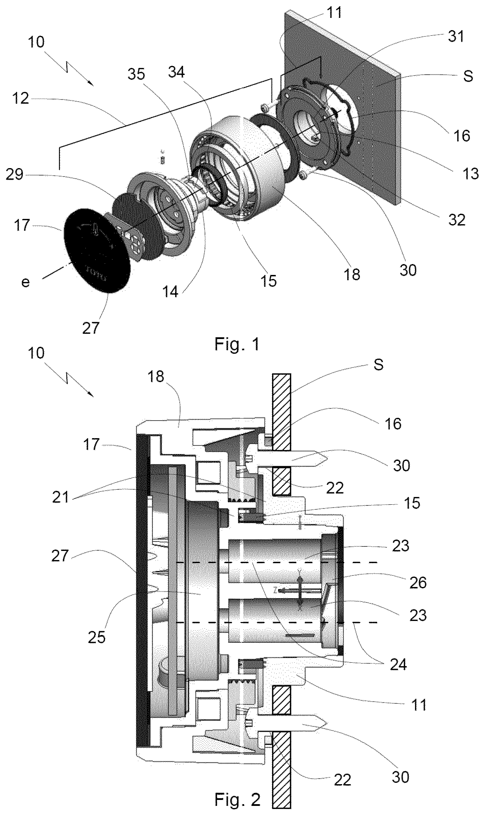

In the present preferred embodiment of the invention, and as shown in figures 1 and 2, the electronic control (10) is installed on a surface (S), such as the wall of a shower cubicle or area, to govern an assembly of shower and its water mixing and flow supply system, not shown in the figures, as well as to monitor the status of said supplied water and other possible information and possible configurations of the assembly, this electronic control (10) being installed independently of this water mixing and supply system, communicating with it by means of a cable system (24).

The electronic control (10), in the present embodiment, is an electronic control (10) comprising a first main part which is a mounting base (11) which is installed in the surface (S) corresponding to the wall of the shower cubicle using fixing means (30), such as screws, which fit into the through-openings (22) of this mounting base (11). Said base (11) has a central opening (31), by way of a passage area of the cable system (24) from the inside of the wall towards the control (10). This central opening (31) of the mounting base also acts as the reception and anchoring means (13).

To protect these openings (22,31) from possible incidence of water flowing on the surface (S) of the wall, a gasket (16) is installed between the mounting base (11) and said surface (S), preventing water from reaching these openings (22,31).

The mounting base (11) has, as indicated, reception and anchoring means (13) for coupling and anchoring the body (12) of the electronic control (10). These receiving and anchoring means (13) are formed in the present embodiment by a cylindrical body wherein the coupling element (14) of the body (12) is inserted and fitted, also of an appreciably cylindrical and complementary configuration, a protuberance (32) being located on the cylindrical fitting surface of the receiving and anchoring means (13). This coupling element (14) of the body (12) of the electronic control (10) has a grooving and guiding geometry (34) of the passage of the protuberance (32) of the reception and anchoring means (13) forming between both parts (13, 14) a bayonet-type mounting system, with an end position of anchoring in a step (35) to avoid the uncoupling path involuntarily.

Alternatively to the above, a coupling system may be provided between the mounting base parts (11) and the control body (12) wherein the complementary location of the grooving elements and the anchoring protuberances may be interchangeably inverted.

Alternatively, other mounting systems can be used as long as they allow the use of the basic technical characteristics of this control (10).

The other main part the electronic control (10) comprises is said control body (12) that is mounted on the mounting base (11) as described above. The body (12) is the part that, in addition to the coupling elements (14) to the base (11), comprises a monitoring and/or control interface (17) comprising a rotary element (18) for selecting parameters and/or regulation/monitoring options, performing the rotation of said rotary element (18).

The configuration of the watertightness between the joined parts (11,12) is carried out thanks to the disposal of a sealing element (15) with elastic properties between coupling walls (21) between the mounting base (11) and the body (12), these walls (21) in the present embodiment being perpendicular to the insertion axis (e). This elastic sealing element (15) is compressed in the direction of the insertion axis (e) so as to exert a pressure in said direction and against said coupling walls (21).

According to the present embodiment, and as can be seen in the figures, the sealing element (15) is configured by way of an elastic joint that performs in a single part the preload functions to prevent disassembly, allow the absorption of mounting tolerances of the mounted assemblies (11 and 12), shock absorption and the corresponding sealing of the mounting joint between said assemblies (11 and 12).

This sealing element by way of elastic joint mode is configured so that it has a rectangular section and a height to width ratio of 4 to 1, taking height as the direction of the mounting axis. Other section geometries can be used such as oval or the like, which allow having that greater ratio between height and width, as well as other ratios that are preferably between 2 to 1 and up to 5 to 1, having a suitable size for the assemblies between which one wants to dispose.

This elastic joint as a sealing element (15) is composed of an elastomer, which in the present embodiment is of the NBR, silicones and/or EPDM type.

The walls of each part to be coupled (11 and 12) maintain a separation (d) in the direction of the insertion axis (e), allowing a slight axial displacement in the direction of insertion, in its mounting position. This separation (d), of between 2 and 5 mm in this embodiment, makes it possible to have a relative movement in said longitudinal direction in the insertion axis (e) to bridge the anchoring of the reception and anchoring means (13) in the coupling means (14), as well as to absorb the impacts and forces exerted in said direction and sense of insertion, making both for said relative movement, as well as for the absorption of impacts and pressures, a greater compression of the elastic sealing element (15).

This elastic sealing element (15) makes a friction with the coupling walls (21), due to the pressure exerted by said preloaded sealing element, which hinders an involuntary disassembly rotation between the two mounting parts that come into contact (14,13).

The sealing element (15) with elastic properties, is configured so as to manually perform its compression-preload in the process of mounting the body (12) on the mounting base (11) and in its final position. In that preload position, with the sealing element (15) compressed between 15% and 30%, it is configured to perform a pressure against the coupling walls (21) that causes the bayonet coupling system to maintain the protuberance (32) on the step (35). In addition to this, the configuration of the sealing element (15) allows a slight additional compression in the direction and sense of insertion to absorb impacts or pressures in the same direction and sense and allow relative displacement between parts (11,12), having a maximum compression of around 50%. Alternatively, other compression ratios may arise according to the configuration of the assemblies between which to make this gasket with the additional indicated properties of shock absorption, tolerance control and preload in the mounting position.

With respect to the monitoring and/or control interface (17), this includes a display device (27) of status and/or governance options of the control (10) over the external water mixing and supply means.

Parameters that are selectable may include temperature and flow regulation of the water to be supplied, as well as other regulation options such as selection of water outlet points and their spray type, for example, among many other options. The monitoring performed on the display device (27), in this case a TFT screen, includes the display of said options, of the temperature and flow values, as well as the display of the menus and options for regulating and adjusting the water to be supplied and the operation of the control (10).

In alternative embodiments, a control (10) may be provided with only a display device, or with only parameter selection means, or with both at the same time. These parameter selection means, as has been seen, can by way of rotary element (18) and/or with one or more push-button elements configured for user governance and selection of actuation options. The push-button elements used in alternative embodiments are capacitive, mechanical, optical, piezoelectric push-buttons or the like.

The electronic control (10) includes processing means (29) that perform the management of said control interface (17) and the management of communication with the external water mixing and supply means. These processing means (29) in the present embodiment consisting of a rotary element (18), include a system for determining the angular position of said rotary element (18) of selection, in order to know the user's selection.

This communication between the electronic control (10) and the external water mixing and supply means, not shown in the figures, is performed in this embodiment by a system of cables (24) that are connected in the dry area (25) of the body (12) of the control (10) providing electrical power supply to the processing means (29), as well as data of the operating values of the mixing means and of the values of the status of the water supply, as well as the output of information and regulation orders of the control (10) towards said external water mixing and supply means.

The cable system (24) passes through watertight passages (23) of these cables (24), which communicate with the atmospheric area (26) of the mounting base (11) and from there to said external water mixing and supply means.

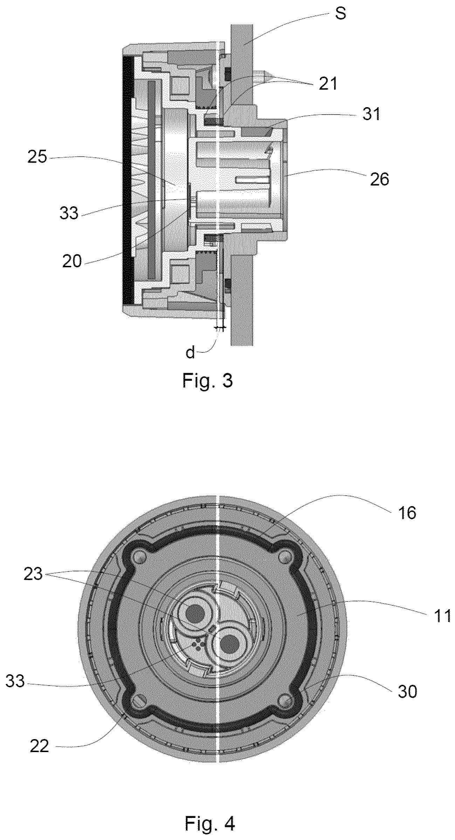

As can be seen in figures 3 and 4, from the dry area (25) of the body (12) communication openings (33) are disposed in at least one surrounding wall of the body (12) of the control (10) that communicates its internal dry area (25) with the external atmospheric area (26), with a pressure balancing membrane (20) disposed in these openings (33), covering them. This membrane (20) impermeable to water but permeable to air passage, will prevent overpressures inside the body (12) of the watertight control (10).

Alternatively, the communication of the control (10) with the external water mixing and supply means is carried out by wireless devices, so that the passage of cables inside the control is not necessary, nor is it necessary to have a through-opening in the mounting base.

Although reference has been made to a specific embodiment of the invention, it is evident to a person skilled in the art that the electronic control with watertight structure described herein is susceptible to numerous variations and modifications, without departing from the scope of protection defined by the attached claims.

## Claims

1. Electronic control with watertight structure, which is configured to be installed in a wet area as a control device of a water supply assembly wherefrom it is independent, wherein the electronic control incorporates elements of interaction with an user by way of monitoring and/or regulating flow and/or temperature parameters of water to be supplied and/or other information/operating options of the water supply assembly, configured to be in communication with external water mixing and supply means, wherein the electronic control (10) comprises:
- a mounting base (11) which is fixed to an installation surface (S) and which comprises receiving and anchoring means (13) for a control body (12); and
- the control body (12) comprising a coupling element (14) to the receiving and anchoring means (13) of the mounting base (11) and elements for monitoring and/or regulating the flow and/or temperature parameters of the water to be supplied;
**characterised in that**
at least one sealing element (15) with elastic properties is disposed between coupling walls (21) corresponding to the coupling element (14) and the receiving and anchoring means (13), wherein the sealing element (15) is located between the coupling walls (21) that are perpendicular to an insertion axis (e) of the body (12) in the mounting base (11) or appreciably inclined, said coupling walls (21) maintaining at least a certain component perpendicular to the insertion axis (e),
wherein, in a position of mounting and normal use of the control (10), the sealing element (15) is compressed, exerting a force in an axial direction of the insertion axis (e) against the coupling walls (21), which are perpendicular or appreciably inclined with respect to said insertion axis, keeping the walls of the mounting base (11) separate from those of the body (12) that would limit an axial displacement between them if they were in contact, the sealing element (15) being configured so as to prevent the entry of water in the central area inside the sealing element, absorbing both the axial mounting tolerances, as well as the pressures or impacts that are applied on the body (12) in the direction of the insertion axis (e) and in the coupling direction; and
wherein the sealing element (15) consists of an elastic joint composed, at least, of elastomeric material, wherein the elastic joint is the only elastic sealing element, the only impact absorption element, the only tolerance absorption element and the only preload mounting element in the joint of the mounting base (11) and the control body (12).

2. Electronic control with watertight structure, according to claim 1, wherein a mounting system between the receiving and anchoring means (13) of the mounting base (11) and the coupling means (14) of the body (12) form a simultaneous rotation and axial displacement coupling system, with an anchoring in a final mounting position by way of bayonet-type closure or the like.

3. Electronic control with watertight structure, according to claim 2, wherein the base (11), has a mounting aid element or characteristic that enables orienting its final mounting position forcing the coupling of the body (12) to be in a desired final operating orientation, wherein this guiding element is a protruding tab, mark or a chamfer of its perimeter geometry.

4. Electronic control with watertight structure, according to claim 1 or 2, wherein the sealing element (15) performs a friction due to a pressure exerted between the coupling walls (21) to the rotation of the body (12), with respect to the base (11), hindering an involuntary disassembly rotation between the coupling means (14) of the body (12) and the receiving and anchoring means (13) of the mounting base (11) that come into contact.

5. Electronic control with watertight structure, according to any of the preceding claims, wherein the communication with the external water mixing and supply means is performed by cables (24) that are connected in a dry area (25) of the body (12) of the control (10) passing these cables (24) through watertight passages (23) and that communicate with an atmospheric area (26) of the mounting base (11) and from there to said external water mixing and supply means.

6. Electronic control with watertight structure, according to any of claims 1 to 4, wherein the communication with the external water mixing and supply means is performed by wireless devices.

7. Electronic control with watertight structure, according to claim 5, wherein between the mounting base (11) and the installation surface (S) there is, at least, a gasket (16) of the electronic control that prevents the passage of water to the area of the passage of cables (24) through the installation surface (S) towards the control (10), and/or towards the area of through-openings (22) of the fixing means (30) from the base (11) to the installation surface (S).

8. Electronic control with watertight structure, according to claim 5 or 6, wherein in the dry area (25) of the body (12) there are one or more communication openings (33) in at least one surrounding wall of the control (10) body (12) that communicates its internal dry area (25) with the external atmospheric area (26), with a pressure balancing membrane (20) disposed transversely in these openings (33), covering them.

9. Electronic control with watertight structure, according to any of the preceding claims, wherein the body (12) has a monitoring and/or control interface (17) comprising a rotary element (18) for selecting parameters and/or regulation/monitoring options.

10. Electronic control with watertight structure, according to claim 9, wherein the monitoring and/or control interface (17) includes a display device (27) of status and/or governance options of the control (10) over the external water mixing and supply means.

11. Electronic control with watertight structure, according to any claims 9 or 10, wherein the monitoring and/or control interface (17) includes one or more push-button elements configured for the governance and selection of actuation options by the user.

12. Electronic control with watertight structure, according to claim 11, wherein the push-button elements are capacitive, mechanical, optical, piezoelectric push-buttons or the like.

13. Electronic control with watertight structure, according to any of claims 9 to 12, wherein the body (12) includes processing means (29) that perform the management of said control interface (17) and the management of the communication with the external water mixing and supply means.

14. Electronic control with watertight structure, according to claim 13, wherein the processing means (29) includes a system for determining the angular position of the rotary element (18) of selection.

15. Electronic control with watertight structure, according to claim 1, wherein the elastic joint has an aspect ratio of, preferably, 2 to 1 up to a 5 to 1 ratio between its height and width, taking the height in the direction of the mounting axis.

## Patentansprüche

1. Elektronische Steuerung mit wasserdichter Struktur, die konfiguriert ist, in einem Nassbereich als eine Steuervorrichtung einer Wasserversorgungsanordnung, von der sie unabhängig ist, installiert zu werden, wobei die elektronische Steuerung Elemente für Wechselwirkung mit einem Anwender durch Überwachen und/oder Regulieren von Durchfluss- und/oder Temperaturparametern des zuzuführenden Wassers und/oder andere Informations-/Betriebsoptionen der Wasserversorgungsanordnung, die konfiguriert ist, mit externen Wassermischungs- und -versorgungsmitteln in Kommunikation zu sein, enthält, wobei die elektronische Steuerung (10) umfasst:
- eine Montagebasis (11), die an einer Installationsoberfläche (S) befestigt ist und die Aufnahme- und Verankerungsmittel (13) für einen Steuerkörper (12) enthält; und
- der Steuerkörper (12) ein Element (14) für Kopplung mit den Aufnahme- und Verankerungsmitteln (13) der Montagebasis (11) und Elemente zum Überwachen und/oder Regulieren der Durchfluss- und/oder Temperaturparameter des zuzuführenden Wassers enthält;
**dadurch gekennzeichnet, dass**
wenigstens ein Dichtungselement (15) mit elastischen Eigenschaften zwischen Kopplungswänden (21), die dem Kopplungselement (14) entsprechen, und den Aufnahme- und Verankerungsmitteln (13) angeordnet ist, wobei sich das Dichtungselement (15) zwischen den Kopplungswänden (21), die zu einer Einsetzachse (e) des Körpers (12) in die Montagebasis (11) senkrecht sind oder erheblich geneigt sind, befindet, wobei die Kopplungswände (21) wenigstens eine bestimmte Komponente senkrecht zu der Einsetzachse (e) halten,
wobei in einer Montageposition und bei normaler Verwendung der Steuerung (10) das Dichtungselement (15) komprimiert ist und in einer axialen Richtung der Einsetzachse (e) auf die Kopplungswände (21), die in Bezug auf die Einsetzachse senkrecht sind oder erheblich geneigt sind, eine Kraft ausübt, um die Wände der Montagebasis (11) getrennt von jenen des Körpers (12) zu halten, die eine axiale Verlagerung zwischen ihnen begrenzen würden, falls sie in Kontakt wären, wobei das Dichtungselement (15) konfiguriert ist, den Eintritt von Wasser in den zentralen Bereich in dem Dichtungselement zu verhindern, wobei sowohl die axialen Montagetoleranzen als auch die Drücke oder Einwirkungen, die auf den Körper (12) in Richtung der Einsetzachse (e) und in der Kopplungsrichtung ausgeübt werden, absorbiert werden; und
wobei das Dichtungselement (15) aus einer elastischen Gelenkverbindung besteht, die wenigstens aus elastomerem Material aufgebaut ist, wobei die elastische Gelenkverbindung das einzige Dichtungselement, das einzige Einwirkungsabsorptionselement, das einzige Toleranzabsorptionselement und das einzige Vorbelastungsmontageelement in der Gelenkverbindung der Montagebasis (11) und des Steuerkörpers (12) ist.

2. Elektronische Steuerung mit wasserdichter Struktur nach Anspruch 1, wobei ein Montagesystem zwischen den Aufnahme- und Verankerungsmitteln (13) der Montagebasis (11) und den Kopplungsmitteln (14) des Körpers (12) ein Kopplungssystem für eine gleichzeitige Drehung und axiale Verlagerung bildet, wobei eine Verankerung in der endgültigen Montageposition mittels eines Bajonettverschlusses oder dergleichen erfolgt.

3. Elektronische Steuerung mit wasserdichter Struktur nach Anspruch 2, wobei die Basis (11) ein Montageunterstützungselement oder eine Montageunterstützungseigenschaft besitzt, das bzw. die die Orientierung in ihrer endgültigen Montageposition ermöglicht und die Kopplung des Körpers (12) in einer gewünschten endgültigen Betriebsorientierung erzwingt, wobei dieses Führungselement eine vorstehende Lasche, Markierung oder eine Fase seiner Umfangsgeometrie ist.

4. Elektronische Steuerung mit wasserdichter Struktur nach Anspruch 1 oder 2, wobei das Dichtungselement (15) für die Drehung des Körpers (12) in Bezug auf die Basis (11) eine Reibung aufgrund eines Drucks, der zwischen den Kopplungswänden (21) ausgeübt wird, erzeugt, wodurch eine unabsichtliche Zerlegungsdrehung zwischen den Kopplungsmitteln (14) des Körpers (12) und den Aufnahme- und Verankerungsmitteln (13) der Montagebasis (11), die in Kontakt gelangen, verhindert wird.

5. Elektronische Steuerung mit wasserdichter Struktur nach einem der vorhergehenden Ansprüche, wobei die Kommunikation mit den externen Wassermischungs- und -versorgungsmitteln über Kabel (24) erfolgt, die in einem Trockenbereich (25) des Körpers (12) der Steuerung (10), der diese Kabel (24) durch wasserdichte Durchlässe (23) führt, angeschlossen sind und die mit einem Atmosphärenbereich (26) der Montagebasis (11 und von dort mit den externen Wassermischungs- und -versorgungsmitteln kommunizieren.

6. Elektronische Steuerung mit wasserdichter Struktur nach einem der Ansprüche 1-4, wobei die Kommunikation mit den externen Wassermischungs- und -versorgungsmitteln über drahtlose Vorrichtungen erfolgt.

7. Elektronische Steuerung mit wasserdichter Struktur nach Anspruch 5, wobei zwischen der Montagebasis (11) und der Installationsoberfläche (S) wenigstens eine Dichtung (16) der elektronischen Steuerung vorhanden ist, die den Durchgang von Wasser zu dem Bereich der Kabeldurchlässe (24) durch die Installationsoberfläche (S) zu der Steuerung (10) und/oder zu dem Bereich von Durchgangsöffnungen (22) der Befestigungsmittel (30) von der Basis (11) zu der Installationsoberfläche (S) verhindert.

8. Elektronische Steuerung mit wasserdichter Struktur nach Anspruch 5 oder 6, wobei in dem Trockenbereich (25) des Körpers (12) eine oder mehrere Kommunikationsöffnungen (33) in wenigstens einer Umgebungswand des Körpers (12) der Steuerung (10) vorhanden sind, die Kommunikation zwischen seinem inneren Trockenbereich (25) und dem Bereich (26) der äußeren Atmosphäre bereitstellen, wobei quer zu diesen Öffnungen (33) eine Druckausgleichsmembran (22 angeordnet ist, die sie bedeckt.

9. Elektronische Steuerung mit wasserdichter Struktur wobei der Körper (12) eine Überwachungs- und/oder Steuerschnittstelle (17) besitzt, die ein Drehelement (18) enthält, um Parameter und/oder Regulierungs-/Überwachungsoptionen auszuwählen.

10. Elektronische Steuerung mit wasserdichter Struktur nach Anspruch 9, wobei die Überwachungs- und/oder Steuerschnittstelle (17) eine Anzeigevorrichtung (27) für Zustands- und/oder Einstelloptionen der Steuerung (10) für die externen Wassermischungs- und -versorgungsmittel enthält.

11. Elektronische Steuerung mit wasserdichter Struktur nach einem der Ansprüche 9 oder 10, wobei die Überwachungs- und/oder Steuerschnittstelle (17) ein oder mehrere Druckknopfelemente enthält, die für die Einstellung und/oder Auswahl von Betätigungsoptionen durch den Anwender konfiguriert sind.

12. Elektronische Steuerung mit wasserdichter Struktur nach Anspruch 11, wobei die Druckknopfelemente kapazitive, mechanische, optische oder piezoelektrische Druckknöpfe oder dergleichen sind.

13. Elektronische Steuerung mit wasserdichter Struktur nach einem der Ansprüche 9 bis 12, wobei der Körper (12) Verarbeitungsmittel (29) enthält, die das Management der Steuerschnittstelle (17) und das Management der Kommunikation mit den externen Wassermischungs- und -versorgungsmitteln ausführen.

14. Elektronische Steuerung mit wasserdichter Struktur nach Anspruch 13, wobei die Verarbeitungsmittel (29) ein System zum Bestimmen der Winkelposition des Auswahl-Drehelements (18) enthalten.

15. Elektronische Steuerung mit wasserdichter Struktur nach Anspruch 1, wobei die elastische Gelenkverbindung ein Aspektverhältnis vorzugsweise von 2:1 bis 5:1 zwischen ihrer Höhe und ihrer Breite besitzt, wobei die Höhe in Richtung der Montageachse gemessen wird.

## Revendications

1. Commande électronique à structure étanche à l'eau, qui est configurée pour être installée dans une zone humide en tant que dispositif de commande d'un ensemble de distribution en eau dont elle est indépendante, dans laquelle la commande électronique incorpore des éléments d'interaction avec un utilisateur par le biais d'une surveillance et/ou d'une régulation des paramètres de débit et/ou de température de l'eau à distribuer et/ou d'autres informations/options de fonctionnement de l'ensemble de distribution d'eau, configurée pour être en communication avec des moyens externes de mélange et de distribution d'eau, dans laquelle
la commande électronique (10)
comprend :
- une base de montage (11) qui est fixée à une surface d'installation (S) et qui comprend des moyens de réception et d'ancrage (13) pour un corps de commande (12) ; et
- le corps de commande (12) comprenant un élément d'accouplement (14) aux moyens de réception et d'ancrage (13) de la base de montage (11) et des éléments de surveillance et/ou de régulation des paramètres de débit et/ou de température de l'eau à distribuer ;
**caractérisée en ce que**
au moins un élément d'étanchéité (15) aux propriétés élastiques est disposé entre les parois d'accouplement (21) correspondant à l'élément d'accouplement (14) et les moyens de réception et
d'ancrage (13), dans laquelle
l'élément d'étanchéité (15) est situé entre les parois
d'accouplement (21) qui sont perpendiculaires à un axe d'insertion (e) du corps (12) dans la base de montage (11) ou sensiblement inclinées, lesdites parois d'accouplement (21) conservant au moins une certaine composante perpendiculaire à l'axe d'insertion (e),
dans laquelle, dans une position de montage et lors d'une utilisation normale de la commande (10), l'élément d'étanchéité (15) est comprimé, exerçant une force dans une direction axiale de l'axe d'insertion (e) contre les parois d'accouplement (21), qui sont perpendiculaires ou sensiblement inclinées par rapport audit axe d'insertion, maintenant les parois de la base de montage (11) séparées de celles du corps (12), qui limiteraient un déplacement axial entre elles si elles étaient en contact, l'élément d'étanchéité (15) étant configuré de manière à empêcher l'entrée d'eau dans la zone centrale à l'intérieur de l'élément d'étanchéité, en absorbant à la fois les tolérances de montage axial, et les pressions ou impacts qui sont appliqués sur le corps (12) dans la direction de l'axe d'insertion (e) et dans la direction d'accouplement ; et
dans laquelle l'élément d'étanchéité (15) consiste en un joint élastique composé, au moins, d'un matériau élastomère, dans laquelle le joint élastique est l'élément d'étanchéité élastique, le seul élément
d'absorption d'impact, le seul élément d'absorption de tolérance
et le seul élément de fixation en précontrainte
dans le joint de la base de montage (11)
et le corps de commande (12).

2. Commande électronique à structure étanche, selon la revendication 1, dans laquelle un système de montage entre les moyens de réception et d'ancrage (13) de la base de montage (11) et les moyens d'accouplement (14) du corps (12) forment un système d'accouplement à rotation et à déplacement axial simultanés, avec un ancrage dans une position de montage finale au moyen d'une fermeture à baïonnette ou l'équivalent.

3. Commande électronique à structure étanche, selon la revendication 2, dans laquelle la base (11), possède un élément ou une caractéristique d'aide au montage qui permet d'orienter sa position finale de montage en forçant l'accouplement du corps (12) dans une orientation finale de fonctionnement souhaitée, dans laquelle cet élément de guidage est une languette saillante, une marque ou un chanfrein de sa géométrie périmétrique.

4. Commande électronique à structure étanche, selon la revendication 1 ou 2, dans laquelle l'élément d'étanchéité (15) réalise un frottement dû à une pression exercée entre les parois d'accouplement (21) à la rotation du corps (12), par rapport à la base (11), empêchant une rotation involontaire de désassemblage entre les moyens d'accouplement (14) du corps (12) et les moyens de réception et d'ancrage (13) de la base de montage (11) qui entrent en contact.

5. Commande électronique à structure étanche, selon l'une quelconque des revendications précédentes, dans laquelle la communication avec les moyens externes de mélange et de distribution d'eau est assurée par des câbles (24) qui sont connectés dans une zone sèche (25) du corps (12) de la commande (10) en faisant passer ces câbles (24) par des passages étanches à l'eau (23) et qui communiquent avec une zone atmosphérique (26) de la base de montage (11) et de là, avec lesdits moyens externes de mélange et de distribution d'eau.

6. Commande électronique à structure étanche, selon l'une quelconque des revendications 1 à 4, dans laquelle la communication avec les moyens externes de mélange et de distribution d'eau est assurée par des dispositifs sans fil.

7. Commande électronique à structure étanche, selon la revendication 5, dans laquelle entre la base de montage (11) et la surface d'installation (S) se trouve, au moins, un joint (16) de la commande électronique qui empêche
le passage de l'eau dans la zone du passage des câbles (24) à travers la surface d'installation (S) vers la commande (10), et/ou vers la zone des ouvertures traversantes (22) des moyens de fixation (30) de la base (11) à la surface d'installation (S).

8. Commande électronique à structure étanche, selon la revendication 5 ou 6, dans laquelle dans la zone sèche (25) du corps (12) se trouvent une ou plusieurs ouvertures de communication (33) dans au moins une paroi entourant le corps (12) de commande (10) qui font communiquer sa zone sèche interne (25) avec la zone atmosphérique externe (26), avec une membrane d'équilibrage de pression (20) disposée transversalement dans ces ouvertures (33), les recouvrant.

9. Commande électronique à structure étanche, selon l'une quelconque des revendications précédentes, dans laquelle le corps (12) comporte une interface de surveillance et/ou de commande (17) comprenant un élément rotatif (18) pour la sélection de paramètres et/ou d'options de régulation/surveillance.

10. Commande électronique à structure étanche, selon la revendication 9, dans laquelle l'interface de surveillance et/ou de commande (17) comprend un dispositif d'affichage (27) de l'état et/ou des options de pilotage de la commande (10) sur les moyens externes de mélange et de distribution d'eau.

11. Commande électronique à structure étanche, selon l'une quelconque des revendications 9 ou 10, dans laquelle l'interface de surveillance et/ou de commande (17) comprend un ou plusieurs éléments de bouton-poussoir configurés pour le pilotage et la sélection d'options d'actionnement par l'utilisateur.

12. Commande électronique à structure étanche, selon la revendication 11, dans laquelle les éléments de bouton-poussoir sont des boutons-poussoirs capacitifs, mécaniques, optiques, piézoélectriques ou l'équivalent.

13. Commande électronique à structure étanche, selon l'une quelconque des revendications 9 à 12, dans laquelle le corps (12) comprend des moyens de traitement (29) qui assurent la gestion de ladite interface de commande (17) et la gestion de la communication avec les moyens externes de mélange et de distribution d'eau.

14. Commande électronique à structure étanche, selon la revendication 13, dans laquelle le moyen de traitement (29) comporte un système de détermination de la position angulaire de l'élément rotatif (18) de sélection.

15. Commande électronique à structure étanche, selon la revendication 1, dans laquelle le joint élastique a un rapport d'aspect de, de préférence, 2 à 1 jusqu'à un rapport de 5 à 1 entre sa hauteur et sa largeur, en prenant la hauteur dans la direction de l'axe de montage.
